(19) Europäisches Patentamt / European Patent Office / Office européen des brevets

(11) **EP 2 998 760 B1**

(12) **EUROPEAN PATENT SPECIFICATION**

(45) Date of publication and mention of the grant of the patent:
**07.08.2019 Bulletin 2019/32**

(51) Int Cl.:
***G01S 5/02*** *(2010.01)*      *H04W 64/00* *(2009.01)*

(21) Application number: **14306453.3**

(22) Date of filing: **22.09.2014**

(54) **Method, user equipment, system and computer readable medium for localizing an user equipment**

Verfahren, Benutzergerät, System und computerlesbares Medium zur Lokalisierung eines Benutzergeräts

Procédé, équipement utilisateur, système et support lisible par ordinateur pour localiser un équipement utilisateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.03.2016 Bulletin 2016/12**

(73) Proprietor: **Alcatel Lucent**
**91620 Nozay (FR)**

(72) Inventor: **Milioris, Dimitrios**
**91620 Nozay (FR)**

(74) Representative: **Nokia EPO representatives**
**Nokia Technologies Oy**
**Karaportti 3**
**02610 Espoo (FI)**

(56) References cited:
**WO-A1-2005/011321       US-A1- 2006 240 840**
**US-A1- 2009 005 064       US-A1- 2013 023 282**

**Description**

FIELD OF INVENTION

The present subject matter relates to the localization of an user equipment within a wireless network especially but not specifically within a cellular network.

BACKGROUND

The technical problem to be solved is the indoor location estimation of a user equipment, by using received signal strengths (RSS) measurements of the signals received by this user equipment, from the access points (APs) or base stations of the wireless network. Due to the way these RSS measurements are captured, they have correlations and dependencies between them. The technical problem to solve is to make the best used of these correlated and dependent RSS measurements, in order to estimate the location of user equipment.

It is also known the patent applications references US2013/023282, US2006/240804, US2009/005064 and WO2005/011321.

SUMMARY

This summary is provided to introduce concepts related to the localization of an user equipment within a wireless network especially but not specifically within a cellular network.

The invention is defined by method, the user equipment, the system and the computer readable medium of the independent claims.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an example of the present subject matter.

Figure 2 illustrates an example of the localization method.

Figure 3.a illustrates an example of the localization method.

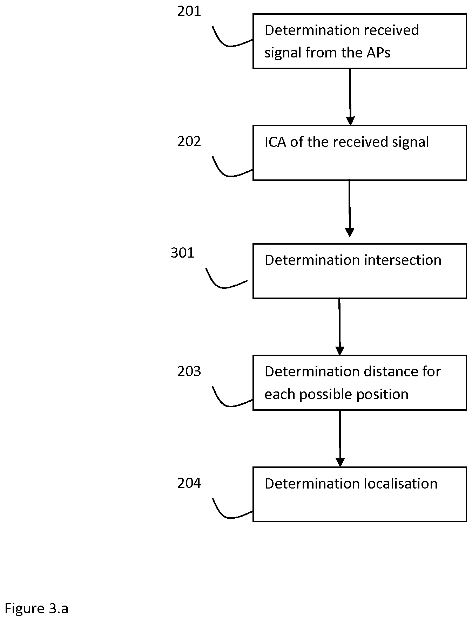

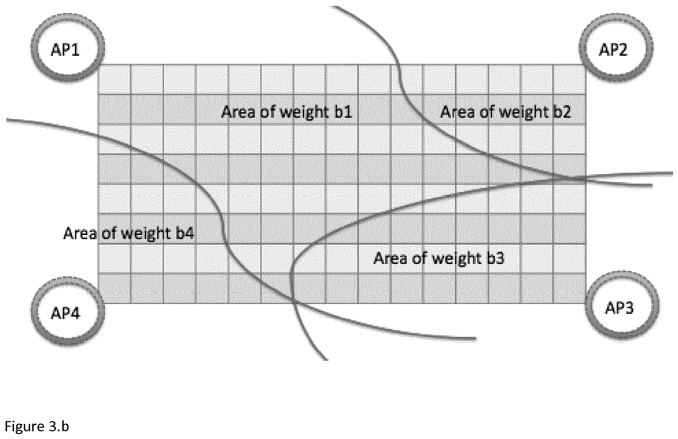

Figure 3.b illustrates the area according to the power of the RSS.

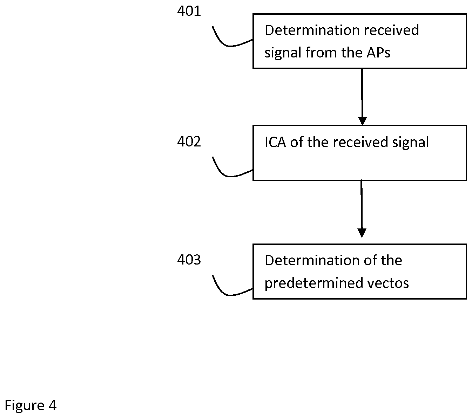

Figure 4 illustrates an example of the localization method.

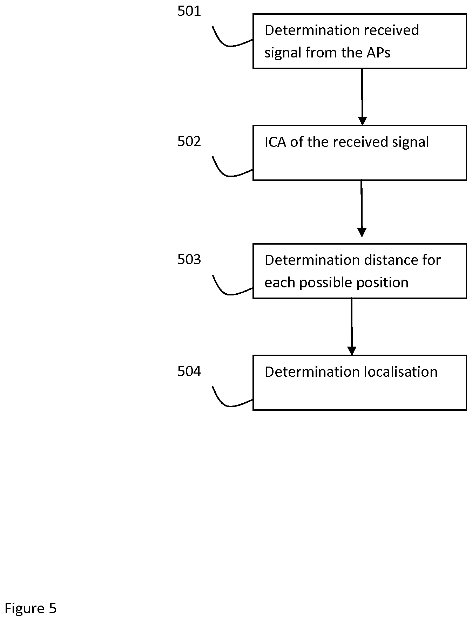

Figure 5 illustrates a user equipment object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

In an example the localization method is based on received signal strength measurements and have an arbitrary assumption that these signals are uncorrelated. Therefore, this localization method does not take into account the interdependencies among the RSS measurements at a certain position, from the various base station or access points.

As a result, they do not use an accurate representation of the RSS profiles, which leads to a poor location accuracy of the method. The positions are also cells and represent a physical space bounded in certain dimensions.

In an example the method of localization uses the interdependencies of the RSS measurements present in an indoor environment. These interdependencies of the RSS measurements provide important information about the geometry of the environment and can be quantified using the second order spatial correlations among the measurements (RSS). The employment of multi-dimensional distributions provides a more accurate representation of the RSS in order to improve the location estimation performance. Simple models, whose parameters, e.g. second-order statistics, can be accurately and easily estimated can be used in a practical localization method.

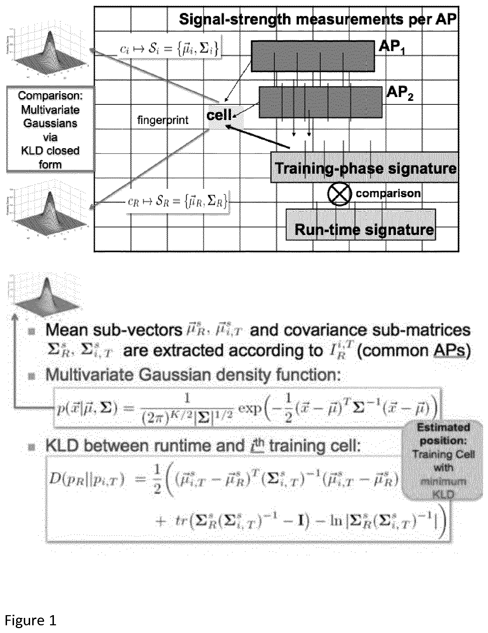

In other words, this example is a localization method that exploits the spatial correlations of RSS collected from various wireless access points based on a multivariate Gaussian model, shown in Figure 1. This is mainly done by an independent component analysis filter (ICA) applied on the RSS to get the most important information (RSS) of them, under different conditions.

In an example, the localization method takes into consideration not only the signal strength measurements from each AP but also the interplay between received signals, by using the so called multivariate Gaussian (MvG)-based approach, which is the covariance of measurements collected from pairs of access points. In this example the RSS measurement collected are passed through the ICA filter. The result is a new set of signals measurement RSS so called RSS_N, which contains the most important measurements of the initial given signals.

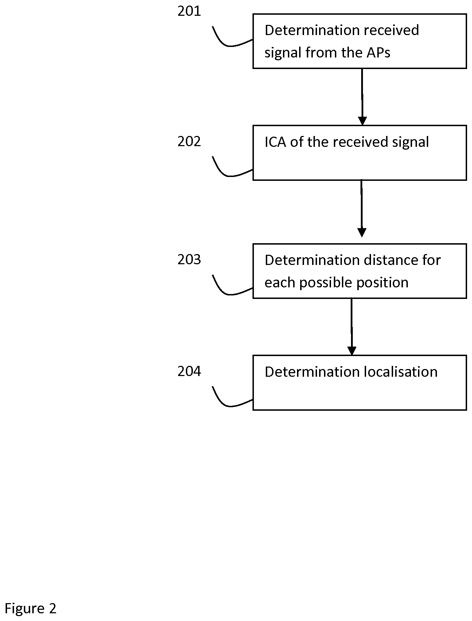

Figure 2 presents another example of the localization method. This method is dedicated to the determination of the actual position of an user equipment among a plurality of possible positions, each possible position being associated with a predetermined vector describing a power of signals received at this position from a plurality of base stations, the method comprising the following steps;

a step 201 of determining a received vector describing a power of signals received from the plurality of base stations by the user equipment, and

a step 202 of independent component analysis of the received vector in order to obtain a uncorrelated vector, and

a step 203 of determining for each possible position a distance between the uncorrelated intersection and the predetermined vector associated with this position, and

a step 204 of determining the position of the user equipment by using at least one of the distances associated to the possible positions.

In an example, presented figure 3.a, the method also comprises a further step 301 of determining an intersection between the predetermined and received vector and containing only the description of the power of signals received from the base stations part of the predetermined and the received vector.

In other words within this step 301 of determining an intersection, we compare one by one the access points that are listened within the received vector and the predetermined vector. This is done because not all access points or base stations are listened in every cell of the physical space. For example if we suppose that we have 8 access points in total, and at the cell with coordinates of the physical space x, y :1,3 we get the measurement of the RSS from only the access points 2,3,4,5,6,7,8. Now, suppose that at the unknown cell that we want to find its true location we get measurement RSS from the access points: 1,2,3,4,5,6,7. The intersection set for this two set of access points is access points: 2,3,4,5,6,7 and we will use only that measurement of RSS, since only that measurement can be logically computed/measured. If we try to use less or more info, it will lead to singularities, since some access points are missing. However, even without this step 301 of determining an intersection, the localization method will work but without obtaining optimal performances.

In an example of the present subject matter, the predetermined and received vector describing a power of signals received at a given position from a plurality of base stations is described by:

$$t_{i,j} = \begin{bmatrix} RSS_{i,j}^1 & \cdots & RSS_{i,j}^N \end{bmatrix}$$

wherein;

$t_{i,j}$ is the vector associated to the position $i,j$,

$RSS_{i,j}^k$ is the power of the signal received from the base station k at the position $i,j$,

$N$ is the number of base stations.

In other words during the step of independent component analysis the data that we have in the first place is the measurements RSS and called $t$ vectors. The data that we want after the ICA filtering are the so called $s$ vectors. These vectors contain the clean signals that will be used as an input of the algorithm. In order to obtain these vectors $s$, we need to solve the linear transformation $s = Wt$ where $W$ is the weights for the components - $w$ vectors - that if we multiply with *t* will give *s,* i.e. *t* = *W*⁻¹*s.* We calculate adaptively the *W* matrix (its vectors) which can be done by minimizing the mutual information, achieved by minimizing the entropies of *s.* As a result we get the *s* vectors which are equivalent to *t'* vectors, which are given as an input to the step 203 of determining a distance.

In an example the step 204 of determination of the position is configured to take the barycenter of at least one of the possible positions weighting by the distances associated to the possible positions obtained by the RSS measurements of the predetermined vector in the areas of the physical space.

The figure 3.b presents, the areas (group of cells or positions) according to the RSS measurements of the predetermined vector.

In this example the method for localization comprises a training phase and a runtime phase. The aim of the training phase is to determine the predetermined vectors describing a power of signals received, at each possible positions, from a plurality of base stations.

The training phase, illustrated in figure 4, comprises the following steps:

a step 401 of determining received vectors describing a power of signals received from the plurality of base stations associated to least one of the available positions and,
a step 402 of independent component analysis of at least one of the received vector in order to obtain a uncorrelated vector, and,
a step 403 of determining the predetermined vectors describing the power of signals received at this position from a plurality of base stations as being the uncorrelated vector calculated within the step 402 of independent component analysis.

In other words the step 401 of determining received vectors corresponds to a step of collecting RSS measurements from the access points at each position of the physical space with a device, e.g. laptop, tablet, Smartphone, etc.

In other words the step 402 of independent component analysis corresponds to a step of using ICA filter on the device's received measurements, which are mixed and correlated signals. This can be done by solving the Blind Source Separation problem on the collected RSS measurements. The result of this step set contains the observed mixed signals, which are forced to be uncorrelated, with the correlations taken into account to separate the signal.

In other words step 403 of determining the predetermined vectors corresponds to a final step of the training phase wherein, for every cell of the physical space, a signature map is generating by using training RSS_N from the access points.

As already presented in the previous sections and in other words the runtime phase comprises the following steps:
A step of collecting Collect RSS measurements using signal received from the access points at the unknown position.

A step of calculation the intersection of the access points of training RSS measurements and runtime RSS measurements at a given unknown position.

A step of using an ICA filter on the device's received measurements, which are mixed and correlated signals. This can be done by solving the blind source separation problem on the given signals set. The result of this step set contains the observed mixed signals, which are forced to be uncorrelated, with the correlations taken into account.

A step of estimating for each possible cell/position of the physical space the Kullback-Leibler divergence (KLD) distance between the training and runtime signatures in other words the KLD distance between the filtered received measurements and the signature maps.

A step of determining the localization of the user equipment as being the position/cell that minimize the KLD (Kullback-Leibler divergence). In other words the step 204 of determination of the position is also configured to determine the position as being the position associated to the said minimal distance.

Figure 1 gives the formula used to model a Multivariate Gaussian distribution (MvG)

$$p(\vec{x}|\vec{\mu}, \mathbf{\Sigma}) = \frac{1}{(2\pi)^{K/2}|\mathbf{\Sigma}|^{1/2}} exp\left(-\frac{1}{2}(\vec{x} - \vec{\mu})^T\mathbf{\Sigma}^{-1}(\vec{x} - \vec{\mu})\right)$$

where $\vec{\mu}$ is the mean and $\Sigma$ is the covariance matrix of the vector describing a power of signals received (RSS) of the different access points. $|\Sigma|$ is the determinant of $\Sigma$, *K* is the dimenionality, where in our problem is equal to the number of access points, i.e. *N.* The value of the *exp* function is the Mahalanobis distance which gives the distance of the test point *x* from the mean $\mu$. In the case of univariate Gaussian, this distance is reduced to the Euclidean with K=1. In order to measure the similarity between two MvG, e.g. training MvG and runtime MvG, we use the Kullback-Leibler closed form expression, given by the formula

$$D\left(p_R \middle| p_{i,T}\right) = \frac{1}{2}\left(\left(\vec{\mu}_{i,T}^{\,s} - \vec{\mu}_R^{\,s}\right)^T \left(\boldsymbol{\Sigma}_{i,T}^{\,s}\right)^{-1}\left(\vec{\mu}_{i,T}^{\,s} - \vec{\mu}_R^{\,s}\right) + tr\left(\boldsymbol{\Sigma}_R^{\,s}\left(\boldsymbol{\Sigma}_{i,T}^{\,s}\right)^{-1} - \mathbf{I}\right) - ln\left|\boldsymbol{\Sigma}_R^{\,s}\left(\boldsymbol{\Sigma}_{i,T}^{\,s}\right)^{-1}\right|\right)$$

shown in Figure 1, where $R$ and $T$ stands for runtime and training respectively, $.p_R$ and $p_{i,T}$ are the RSS measurements in these positions that we test by using the Kullback-Leibler divergence that particular time, $\vec{\mu}_{i,T}^{\,s}$ and $\vec{\mu}_R^{\,s}$, are the mean, $\boldsymbol{\Sigma}_{i,T}^{\,s}$ and $\boldsymbol{\Sigma}_R^{\,s}$ are the covariance matrix associated to the RSS measurement within area or position s, I is the identity matrix and tr(.) denotes the trace function.

By using ICA, we get clean and non-dependent signals, so we don't have to model them with an MvG, and for simplicity we may use the vector describing a power of signals received (RSS) as raw data - which reduces to using univariate Gaussians with K=1 - since we will get a position on the physical space for every access point. In that case, suppose that we have vector $R_i$ and vector $T_i$, which are RSS for runtime and training respectively for the access point i. The KLD will have the simple form $D(R_i\|T_i) = sum(R_j ln(R_j/T_j))$ where j = 1, ..., length of the vector describing a power of signals received (RSS).

The figure 5 presents an example of a user equipment capable of localizing itself by way of receiving signal from different base stations or access points. This determination of the localization is made among a plurality of possible positions, each possible position being associated with a predetermined vector describing a power of signals received at this position from a plurality of base stations. The user equipment comprises:

a first determination module 501 configured to determine received vector describing a power of signals received from the plurality of base stations by the user equipment, and

a independent component analysis module 502 configured to realize an independent component analysis of the received vector in order to obtain a uncorrelated vector, and

a second determination module 503 configured to determine for each possible position a distance between the uncorrelated intersection and the predetermined vector associated with this position, and

a third determination module 504 configured to determine the position of the user equipment by using at least one of the distances associated to the possible positions.

In an example the different modules are realized using one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

In an example a system dedicated to handle the localization of a user equipment by using the method of the present subject matter is presented. The system comprises at least one user equipment and at least one base station. The user equipment comprises

a first determination module 501 configured to determine received vector describing a power of signals received from the plurality of base stations by the user equipment, and

a independent component analysis module 502 configured to realize an independent component analysis of the received vector in order to obtain a uncorrelated vector, and

a second determination module 503 configured to determine for each possible position a distance between the uncorrelated intersection and the predetermined vector associated with this position, and

a third determination module 504 configured to determine the position of the user equipment by using at least one of the distances associated to the possible positions.

A person skilled in the art will readily recognize that steps of the methods, presented above, can be performed by programmed computers. Herein, some examples are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an example of the subject matter, the localization method described figure 2 can be performed by programmed computers. This method for determining the actual position of an user equipment among a plurality of possible positions, each possible position being associated with a predetermined vector describing a power of signals received at this position from a plurality of base stations. The method comprises the following steps;

a step 201 of determining a received vector describing a power of signals received from the plurality of base stations by the user equipment, and

a step 202 of independent component analysis of the received vector in order to obtain a uncorrelated vector, and

a step 203 of determining for each possible position a distance between the uncorrelated intersection and the predetermined vector associated with this position, and

a step 204 of determining the position of the user equipment by using at least one of the distances associated to the possible positions.

**Claims**

1. A method for determining the actual position of a user equipment among a plurality of possible positions, each possible position being associated with a predetermined vector describing a power of signals received at this position from a plurality of base stations, the method comprising the following steps;

   a step (201) of determining a received vector describing a power of signals received from the plurality of base stations by the user equipment, and
   a step (202) of independent component analysis of the received vector in order to obtain a uncorrelated vector containing only the most important measurements of the signals received from the plurality of base stations, and

   a step (301) of determining an uncorrelated intersection vector containing only the description of the power of signals received from the base stations part of the uncorrelated vector and the predetermined vector
   a step (203) of determining for each possible position a distance between the uncorrelated intersection and the predetermined vector associated with this position, and
   a step (204) of determining the position of the user equipment by using at least one of the distances associated to the possible positions
   wherein the step (204) of determination of the position is also configured to determine the barycenter of at least one of the possible positions weighting by the distances associated to the possible positions depending on the predetermined vector describing a power of signals received in different positions.

2. The method according to the claim 1 wherein the step (204) of determination of the position is also configured to determine the position as being the position associated to the said minimal distance.

3. The method according to the claim 1 or 2 wherein the predetermined vectors, associated to at least on position, describing a power of signals received at this position from a plurality of base stations are determined by using the following steps;

   a step (401) of determining received vectors describing a power of signals received from the plurality of base stations associated to least one of the available positions and,
   a step (402) of independent component analysis of at least one of the received vector in order to obtain a uncorrelated vector, and,
   a step (403) of determining the predetermined vectors describing the power of signals received at this position from a plurality of base stations as being the uncorrelated vector calculated within the step (402) of independent component analysis.

4. A user equipment comprising modules to determine his actual position among a plurality of possible positions, each possible position being associated with a predetermined vector describing a power of signals received at this position from a plurality of base stations, the user equipment comprises:

a first determination module (501) configured to determine received vector describing a power of signals received from the plurality of base stations by the user equipment, and

a independent component analysis module (502) configured to realize an independent component analysis of the received vector in order to obtain a uncorrelated vector containing only the most important measurements of the signals received from the plurality of base stations, and

a determination module configured to determine an uncorrelated intersection vector containing only the description of the power of signals received from the base stations part of the uncorrelated vector and the predetermined vector;

a second determination module (503) configured to determine for each possible position a distance between the uncorrelated intersection and the predetermined vector associated with this position, and

a third determination module (504) configured to determine the position of the user equipment by using at least one of the distances associated to the possible positions wherein the third determination module (504) being also configured to determine the barycenter of at least one of the possible positions weighting by the distances associated to the possible positions depending on the predetermined vector describing a power of signals received in different positions.

5. The user equipment according to claim 4 and also comprising

at least one processor,
and at least one memory coupled to the processor,

the said memory comprising the a first, second and third determination module (501, 503 and 504) and the independent component analysis module (502).

6. A system comprising at least one user equipment and at least one base station, the user equipment comprising

a first determination module (501) configured to determine received vector describing a power of signals received from the plurality of base stations by the user equipment, and

a independent component analysis module (502) configured to realize an independent component analysis of the received vector in order to obtain a uncorrelated vector containing only the most important measurements of the signals received from the plurality of base stations, and

a determination module configured to determine an uncorrelated intersection vector containing only the description of the power of signals received from the base stations part of the uncorrelated vector and the predetermined vector;

a second determination module (503) configured to determine for each possible position a distance between the uncorrelated intersection and the predetermined vector associated with this position, and

a third determination module (504) configured to determine the position of the user equipment by using at least one of the distances associated to the possible positions wherein the third determination module (504) being also configured to determine the barycenter of at least one of the possible positions weighting by the distances associated to the possible positions depending on the predetermined vector describing a power of signals received in different positions.

7. The system according to claim 6 wherein one of the user equipment comprises

at least one processor,
and at least one memory coupled to the processor,

the said memory comprising the a first, second and third determination module (501, 503 and 504) and the independent component analysis module (502).

8. A computer-readable medium having embodied thereon a computer program configured to realize a method for determining the actual position of an user equipment among a plurality of possible positions, each possible position being associated with a predetermined vector describing a power of signals received at this position from a plurality of base stations, the method comprising the following steps;

a step (201)of determining a received vector describing a power of signals received from the plurality of base stations by the user equipment, and

a step (202) of independent component analysis of the received vector in order to obtain a uncorrelated vector containing only the most important measurements of the signals received from the plurality of base stations, and

a step (301) of determining an uncorrelated intersection vector containing only the description of the power of signals received from the base stations part of the uncorrelated vector and the predetermined vector; a step (203) of determining for each possible position a distance between the uncorrelated intersection and the predetermined vector associated with this position, and

a step (204) of determining the position of the user equipment by using at least one of the distances associated to the possible positions

wherein the step (204) of determination of the position is also configured to determine the barycenter of at least one of the possible positions weighting by the distances associated to the possible positions depending on the predetermined vector describing a power of signals received in different positions.

**Patentansprüche**

1. Verfahren zum Bestimmung der tatsächlichen Position eines Benutzergeräts unter mehreren möglichen Positionen, wobei jede mögliche Position einem vorbestimmten Vektor zugeordnet ist, der eine Stärke von Signalen beschreibt, die an dieser Position von mehreren Basisstationen empfangen werden, wobei das Verfahren die folgenden Schritte umfasst;

einen Schritt (201) des Bestimmens eines empfangenen Vektors, der eine Leistung von Signalen beschreibt, die von den mehreren Basisstationen durch das Benutzergerät empfangen werden, und

einen Schritt (202) einer unabhängigen Komponentenanalyse des empfangenen Vektors, um einen unkorrelierten Vektor zu erhalten, der nur die wichtigsten Messungen der von den mehreren Basisstationen empfangenen Signale enthält, und

einen Schritt (301) des Bestimmens eines unkorrelierten Kreuzungsvektors, der nur die Beschreibung der Leistung von von der Basisstation empfangen Signalen enthält, die Teil des unkorrelierten Vektors und des vorbestimmten Vektors sind,

einen Schritt (203) des Bestimmens eines Abstands zwischen dem unkorrelierten Kreuzungs- und dem vorbestimmten Vektor, der dieser Position zugeordnet ist, für jede mögliche Position, und

einen Schritt (204) des Bestimmens der Position des Benutzergeräts unter Verwendung von mindestens einem der den möglichen Positionen zugeordneten Abständen,

wobei der Schritt (204) der Bestimmung der Position auch dazu ausgelegt ist, den Schwerpunkt von mindestens einer der möglichen Positionsgewichtung durch die Abstände zu bestimmen, die den möglichen Positionen zugeordnet sind, in Abhängigkeit von dem vorbestimmten Vektor, der eine Stärke von an unterschiedlichen Positionen empfangenen Signalen beschreibt.

2. Verfahren nach Anspruch 1, wobei der Schritt (204) der Bestimmung der Position auch dazu ausgelegt ist, die Position als die Position zu bestimmen, die dem minimalen Abstand zugeordnet ist.

3. Verfahren nach Anspruch 1 oder 2, wobei die vorbestimmten Vektoren, die mindestens einer Position zugeordneten sind, eine Stärke von Signalen beschreiben, die an dieser Position von mehreren Basisstationen empfangen werden, unter Verwendung der folgenden Schritte bestimmt werden;

einen Schritt (401) des Bestimmens von empfangenen Vektoren, die eine Leistung von Signalen beschreiben, die von den mehreren Basisstationen empfangen werden, die mindestens einer der verfügbaren Positionen zugeordnet sind, und

einen Schritt (402) einer unabhängigen Komponentenanalyse von mindestens einem der empfangenen Vektoren, um einen unkorrelierten Vektor zu erhalten, und

einen Schritt (403) des Bestimmens der vorbestimmten Vektoren, die die Leistung von an dieser Position von mehreren Basisstationen empfangenen Signalen beschreiben, als den im Schritt (402) der unabhängigen Komponentenanalyse berechneten unkorrelierten Vektor.

4. Benutzergerät mit Modulen zur Bestimmung seiner tatsächlichen Position unter mehreren möglichen Positionen, wobei jede mögliche Position einem vorbestimmten Vektor zugeordnet ist, der eine Stärke von Signalen beschreibt, die an dieser Position von mehreren Basisstationen empfangen werden, wobei das Benutzergerät umfasst:

ein erstes Bestimmungsmodul (501), das dazu ausgelegt ist, einen empfangenen Vektor zu bestimmen, der eine Leistung von Signalen beschreibt, die von den mehreren Basisstationen durch das Benutzergerät empfangen werden, und

ein unabhängiges Komponentenanalysemodul (502), das dazu ausgelegt ist, eine unabhängige Komponentenanalyse des empfangenen Vektors zu realisieren, um einen unkorrelierten Vektor zu erhalten, der nur die wichtigsten Messungen der von den mehreren Basisstationen empfangenen Signale enthält, und

ein Bestimmungsmodul, das dazu ausgelegt ist, einen unkorrelierten Kreuzungsvektor zu bestimmen, der nur die Beschreibung der Leistung von Signalen enthält, die von dem Basisstationsteil des unkorrelierten Vektors und dem vorbestimmten Vektor empfangen werden;

ein zweites Bestimmungsmodul (503), das dazu ausgelegt ist, für jede mögliche Position einen Abstand zwischen dem unkorrelierten Kreuzungs- und dem dieser Position zugeordneten vorbestimmten Vektor zu bestimmen, und

ein drittes Bestimmungsmodul (504), das dazu ausgelegt ist, die Position des Benutzergeräts unter Verwendung von mindestens einem der den möglichen Positionen zugeordneten Abständen zu bestimmen,

wobei das dritte Bestimmungsmodul (504) auch dazu ausgelegt ist, den Schwerpunkt von mindestens einer der möglichen Positionsgewichtung durch die Abstände zu bestimmen, die den möglichen Positionen zugeordnet sind, in Abhängigkeit von dem vorbestimmten Vektor, der eine Stärke von an unterschiedlichen Positionen empfangenen Signalen beschreibt.

5. Benutzergerät nach Anspruch 4 und ferner umfassend
mindestens einen Prozessor,
und mindestens einen mit dem Prozessor verbundenen Speicher,
wobei der Speicher das erstes, zweites und drittes Bestimmungsmodul (501, 503 und 504), und das unabhängige Komponentenanalysemodul (502) umfasst.

6. System, umfassend mindestens ein Benutzergerät und mindestens eine Basisstation, wobei das Benutzergerät umfasst
ein erstes Bestimmungsmodul (501), das dazu ausgelegt ist, einen empfangenen Vektor zu bestimmen, der eine Leistung von Signalen beschreibt, die von den mehreren Basisstationen durch das Benutzergerät empfangen werden, und

ein unabhängiges Komponentenanalysemodul (502), das dazu ausgelegt ist, eine unabhängige Komponentenanalyse des empfangenen Vektors zu realisieren, um einen unkorrelierten Vektor zu erhalten, der nur die wichtigsten Messungen der von den mehreren Basisstationen empfangenen Signalen enthält, und

ein Bestimmungsmodul, das dazu ausgelegt ist, einen unkorrelierten Kreuzungsvektor zu bestimmen, der nur die Beschreibung der Leistung von von der Basisstation empfangenen Signalen enthält, die Teil des unkorrelierten Vektors und des vorbestimmten Vektor sind;

ein zweites Bestimmungsmodul (503), das dazu ausgelegt ist, für jede mögliche Position einen Abstand zwischen dem unkorrelierten Kreuzungs- und dem dieser Position zugeordneten vorbestimmten Vektor zu bestimmen, und

ein drittes Bestimmungsmodul (504), das dazu ausgelegt ist, die Position des Benutzergeräts unter Verwendung von mindestens einem der den möglichen Positionen zugeordneten Abständen zu bestimmen,

wobei das dritte Bestimmungsmodul (504) auch dazu ausgelegt ist, den Schwerpunkt von mindestens einer der möglichen Positionsgewichtung durch die Abstände zu bestimmen, die den möglichen Positionen zugeordnet sind, in Abhängigkeit von dem vorbestimmten Vektor, der eine Stärke von an unterschiedlichen Positionen empfangenen Signalen beschreibt.

7. System nach Anspruch 6, wobei eines der Benutzergeräte umfasst
mindestens einen Prozessor,
und mindestens einen mit dem Prozessor verbundenen Speicher,
wobei der Speicher das erstes, zweites und drittes Bestimmungsmodul (501, 503 und 504), und das unabhängige Komponentenanalysemodul (502) umfasst.

8. Computerlesbares Medium, das ein darauf verkörpertes Computerprogramm aufweist, das dazu ausgelegt ist, ein Verfahren zur Bestimmung der tatsächlichen Position eines Benutzergeräts unter mehreren möglichen Positionen zu realisieren, wobei jede mögliche Position einem vorbestimmten Vektor zugeordnet ist, der eine Stärke von an dieser Position von mehreren Basisstationen empfangenen Signalen beschreibt, wobei das Verfahren die folgenden Schritte umfasst;
einen Schritt (201) des Bestimmens eines empfangenen Vektors, der eine Leistung von Signalen beschreibt, die von den mehreren Basisstationen durch das Benutzergerät empfangen werden, und

einen Schritt (202) einer unabhängigen Komponentenanalyse des empfangenen Vektors, um einen unkorrelierten Vektor zu erhalten, der nur die wichtigsten Messungen der von den mehreren Basisstationen empfangenen Signale enthält, und

einen Schritt (301) des Bestimmens eines unkorrelierten Kreuzungsvektors, der nur die Beschreibung der Leistung von von der der Basisstation empfangenen Signalen enthält, die Teil des unkorrelierten Vektors und des vorbestimmten Vektor sind; einen Schritt (203) des Bestimmens eines Abstands zwischen dem unkorrelierten Kreuzungs- und dem dieser Position zugeordneten vorbestimmten Vektor für jede mögliche Position, und

einen Schritt (204) des Bestimmens der Position des Benutzergeräts unter Verwendung von mindestens einem der den möglichen Positionen zugeordneten Abständen,

wobei der Schritt (204) des Bestimmens der Position auch dazu ausgelegt ist, den Schwerpunkt von mindestens einer der möglichen Positionsgewichtung durch die Abstände zu bestimmen, die den möglichen Positionen zugeordnet sind, in Abhängigkeit von dem vorbestimmten Vektor, der eine Stärke von an unterschiedlichen Positionen empfangenen Signalen beschreibt.

## Revendications

1.  Procédé pour déterminer la position réelle d'un équipement utilisateur, parmi une pluralité de positions possibles, chaque position possible étant associée à un vecteur prédéterminé décrivant une puissance de signaux reçus, à cette position, à partir d'une pluralité de stations de base, le procédé comprenant les étapes suivantes :

    une étape (201) de la détermination d'un vecteur reçu décrivant une puissance de signaux reçus, à partir de la pluralité de stations de base, par l'équipement utilisateur, et

    une étape (202) de l'analyse de composantes indépendantes du vecteur reçu afin d'obtenir un vecteur non corrélé contenant seulement les mesures les plus importantes des signaux reçus à partir de la pluralité de stations de base, et

    une étape (301) de la détermination d'un vecteur d'intersection non corrélée contenant seulement la partie description de la puissance de signaux, reçus à partir des stations de base, du vecteur non corrélé et du vecteur prédéterminé,

    une étape (203) de la détermination, pour chaque position possible, d'une distance entre le vecteur d'intersection non corrélé et le vecteur prédéterminé associé à cette position, et

    une étape (204) de la détermination de la position de l'équipement utilisateur en utilisant au moins une des distances associées aux positions possibles,

    dans lequel l'étape (204) de la détermination de la position est également configurée pour déterminer le barycentre d'au moins une pondération des positions possibles par l'intermédiaire des distances associées aux positions possibles en fonction du vecteur prédéterminé décrivant une puissance de signaux reçus dans des positions différentes.

2.  Procédé selon la revendication 1, dans lequel l'étape (204) de la détermination de la position est également configurée pour déterminer la position comme étant la position associée à ladite distance minimale.

3.  Procédé selon la revendication 1 ou 2, dans lequel les vecteurs prédéterminés, associés à au moins une position, décrivant une puissance de signaux reçus, à cette position, à partir d'une pluralité de stations de base, sont déterminés en utilisant les étapes suivantes :

    une étape (401) de la détermination de vecteurs reçus décrivant une puissance de signaux reçus à partir de la pluralité de stations de base associées à moins une des positions disponibles, et

    une étape (402) de l'analyse de composantes indépendantes d'au moins un des vecteurs reçus afin d'obtenir un vecteur non corrélé, et

    une étape (403) de la détermination des vecteurs prédéterminés décrivant la puissance de signaux reçus, à cette position, à partir d'une pluralité de stations de base comme étant le vecteur non corrélé calculé dans l'étape (402) de l'analyse de composantes indépendantes.

4.  Équipement utilisateur, comprenant des modules pour déterminer sa position réelle, parmi une pluralité de positions possibles, chaque position possible étant associée à un vecteur prédéterminé décrivant une puissance de signaux reçus, à cette position, à partir d'une pluralité de stations de base, l'équipement utilisateur comprenant :

un premier module de détermination (501) configuré pour déterminer un vecteur reçu décrivant une puissance de signaux reçus, à partir de la pluralité de stations de base, par l'équipement utilisateur, et

un module d'analyse de composantes indépendantes (502) configuré pour réaliser une analyse de composantes indépendantes du vecteur reçu afin d'obtenir un vecteur non corrélé contenant seulement les mesures les plus importantes des signaux reçus à partir de la pluralité de stations de base, et

un module de détermination configuré pour déterminer un vecteur d'intersection non corrélée contenant seulement la partie description de la puissance de signaux reçus, à partir des stations de base, du vecteur non corrélé et du vecteur prédéterminé,

un deuxième module de détermination (503) configuré pour déterminer, pour chaque position possible, une distance entre le vecteur d'intersection non corrélé et le vecteur prédéterminé associé à cette position, et

un troisième module de détermination (504) configuré pour déterminer la position de l'équipement utilisateur en utilisant au moins une des distances associées aux positions possibles,

dans lequel le troisième module de détermination (504) est également configuré pour déterminer le barycentre d'au moins une pondération des positions possibles par l'intermédiaire des distances associées aux positions possibles en fonction du vecteur prédéterminé décrivant une puissance de signaux reçus dans des positions différentes.

5. Équipement utilisateur selon la revendication 4, et comprenant également
   au moins un processeur,
   et au moins une mémoire couplée au processeur,
   ladite mémoire comprenant les premier, deuxième et troisième modules de détermination (501, 503 et 504) et le module d'analyse de composantes indépendantes (502).

6. Système, comprenant au moins un équipement utilisateur et au moins une station de base, l'équipement utilisateur comprenant
   un premier module de détermination (501) configuré pour déterminer un vecteur reçu décrivant une puissance de signaux reçus, à partir de la pluralité de stations de base, par l'équipement utilisateur, et
   un module d'analyse de composantes indépendantes (502) configuré pour réaliser une analyse de composantes indépendantes du vecteur reçu afin d'obtenir un vecteur non corrélé contenant seulement les mesures les plus importantes des signaux reçus à partir de la pluralité de stations de base, et
   un module de détermination configuré pour déterminer un vecteur d'intersection non corrélée contenant seulement la partie description de la puissance de signaux reçus, à partir des stations de base, du vecteur non corrélé et du vecteur prédéterminé,
   un deuxième module de détermination (503) configuré pour déterminer, pour chaque position possible, une distance entre le vecteur d'intersection non corrélé et le vecteur prédéterminé associé à cette position, et
   un troisième module de détermination (504) configuré pour déterminer la position de l'équipement utilisateur en utilisant au moins une des distances associées aux positions possibles,
   dans lequel le troisième module de détermination (504) est également configuré pour déterminer le barycentre d'au moins une pondération des positions possibles par l'intermédiaire des distances associées aux positions possibles en fonction du vecteur prédéterminé décrivant une puissance de signaux reçus dans des positions différentes.

7. Système selon la revendication 6, dans lequel un des équipements utilisateurs comprend
   au moins un processeur,
   et au moins une mémoire couplée au processeur,
   ladite mémoire comprenant les premier, deuxième et troisième modules de détermination (501, 503 et 504) et le module d'analyse de composantes indépendantes (502).

8. Support lisible par ordinateur ayant, incorporé sur celui-ci, un programme d'ordinateur configuré pour réaliser un procédé pour déterminer la position réelle d'un équipement utilisateur, parmi une pluralité de positions possibles, chaque position possible étant associée à un vecteur prédéterminé décrivant une puissance de signaux reçus à cette position à partir d'une pluralité de stations de base, le procédé comprenant les étapes suivantes :

   une étape (201) de la détermination d'un vecteur reçu décrivant une puissance de signaux reçus, à partir de la pluralité de stations de base, par l'équipement utilisateur, et
   une étape (202) de l'analyse de composantes indépendantes du vecteur reçu afin d'obtenir un vecteur non corrélé contenant seulement les mesures les plus importantes des signaux reçus à partir de la pluralité de stations de base, et
   une étape (301) de la détermination d'un vecteur d'intersection non corrélée contenant seulement la partie description de la puissance de signaux, reçus à partir des stations de base, du vecteur non corrélé et du vecteur prédéterminé ;

une étape (203) de la détermination, pour chaque position possible, d'une distance entre le vecteur d'intersection non corrélé et le vecteur prédéterminé associé à cette position, et

une étape (204) de la détermination de la position de l'équipement utilisateur en utilisant au moins une des distances associées aux positions possibles,

dans lequel l'étape (204) de la détermination de la position est également configurée pour déterminer le barycentre d'au moins une pondération des positions possibles par l'intermédiaire des distances associées aux positions possibles en fonction du vecteur prédéterminé décrivant une puissance de signaux reçus dans des positions différentes.

EP 2 998 760 B1

Figure 1

201 Determination received
signal from the APs

202 ICA of the received signal

203 Determination distance for
each possible position

204 Determination localisation

Figure 2

201 ⟍ Determination received
signal from the APs

202 ⟍ ICA of the received signal

301 ⟍ Determination intersection

203 ⟍ Determination distance for
each possible position

204 ⟍ Determination localisation

Figure 3.a

EP 2 998 760 B1

Figure 3.b

16

401 | Determination received signal from the APs |

402 | ICA of the received signal |

403 | Determination of the predetermined vectos |

Figure 4

501 — Determination received signal from the APs

502 — ICA of the received signal

503 — Determination distance for each possible position

504 — Determination localisation

Figure 5

## REFERENCES CITED IN THE DESCRIPTION

**Patent documents cited in the description**

- US 2013023282 A
- US 2006240804 A
- US 2009005064 A
- WO 2005011321 A